# EUROPEAN PATENT APPLICATION

(11) **EP 4 751 792 A1**
(43) Date of publication of application: **03.06.2026**
(21) Application number: 24844863.1
(22) Date of filing: 26.07.2024
(51) Int. Cl.: B01D 19/00, B01D 21/02, B01J 8/24

(54) **THREE-PHASE SEPARATOR AND FLUIDIZED BED REACTOR COMPRISING THREE-PHASE SEPARATOR**

(30) Priority: 26.07.2023 CN 202310920445
(71) Applicant: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: YUAN, Shenghua, Dalian, Liaoning 116045 (CN); WANG, Zhiwu, Dalian, Liaoning 116045 (CN); GENG, Xinguo, Dalian, Liaoning 116045 (CN); YANG, Zhijun, Dalian, Liaoning 116045 (CN); LI, Anqi, Dalian, Liaoning 116045 (CN); YAN, Hanxue, Dalian, Liaoning 116045 (CN); ZHANG, Cheng, Dalian, Liaoning 116045 (CN); GUAN, Yueming, Dalian, Liaoning 116045 (CN); WANG, Xin, Dalian, Liaoning 116045 (CN); LIU, Xinyuan, Dalian, Liaoning 116045 (CN)
(74) Representative: Hoffmann Eitle
(86) International application number: PCT/CN2024/107692
(87) International publication number: WO 2025/021177

(57) **Abstract**

The invention relates to a three-phase separator and a fluidized bed reactor (100) including the three-phase separator. The three-phase separator includes: an outer housing (101); a central guide barrel (11); an outer guide barrel (2) disposed radially outside of the central guide barrel (11); an upper sealing baffle (4) extending radially between the central guide barrel (11) and the outer guide barrel (2) and being hermetically connected with a top end of the central guide barrel (11) and a top end of the outer guide barrel (2); an overflow guide barrel (3) disposed between the central guide barrel (11) and the outer guide barrel (2), there is a gap between a top end of the overflow guide barrel (3) and the upper sealing baffle (4); a lower sealing baffle (63) extending radially between the outer guide barrel (2) and the overflow guide barrel (3) and being hermetically connected with a bottom end of the outer guide barrel (2) and a bottom portion of the overflow guide barrel (3); and a liquid outlet pipe (7).

## Description

### Technical Field

The invention relates to a technical field of gas-liquid-solid three-phase separation, and more specifically to a gas-liquid-solid three-phase separator and a fluidized bed reactor including the three-phase separator.

### Background

Fluidized bed reactors typically require to provide a gas-liquid-solid three-phase separator in an upper space in the reactor. In a fluidized bed, liquid phase is a continuous phase, gas phase passes through the reactor in a form of bubble powered by the gas, and solid phase is a dispersed phase. Fluidized bed reactors usually have an online catalyst addition and discharge system. During operation, pressure drop in the reactor is relatively stable, making it particularly suitable for a hydrotreating process of low-quality residual oil. High impurity content in feedstock residual oil and high exothermic reaction cause catalyst to deactivate rapidly. The catalyst achieves solid phase circulation within the reactor by periodically online replacing and by the three-phase separator, thereby maintaining stability of reaction system and a super long-time operation.

For example, Chinese patent application CN101376092A discloses a fluidized bed reactor, including a cylindrical reactor housing perpendicular to the ground surface, a three-phase separator in an upper space in the reactor housing, and a guiding structure. The three-phase separator consists of concentric inner barrel and outer barrel with different inner diameters, together with an inner wall of the reactor housing. The inner barrel forms a central tube of the three-phase separator, and an annular space between the outer barrel and the inner wall of the reactor housing is a clean liquid product collection region.

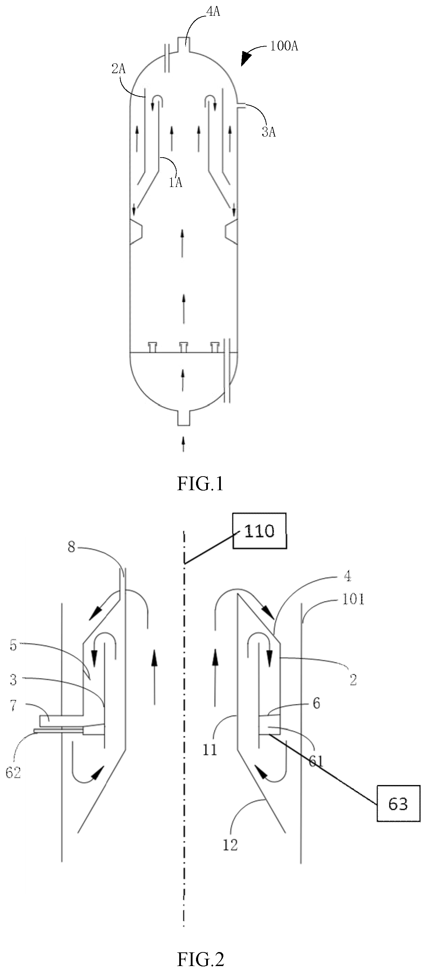

Prior art three-phase separators provide two annular barrels within the upper space in the reactor housing, as shown in FIG.1. Gas-liquid-solid mixture travels upward within the annular inner barrel, undergoes gas-phase separation at an upper gas-liquid interface; after that, liquid-solid mixture fluid flows radially outward into a region between the annular outer barrel and the annular inner barrel and travels downward. In a region below the annular outer barrel, due to a density difference between solid and liquid, the solid separates from the liquid and flows out of the separator, returning to a main reaction region. The remaining liquid, under the action of "U"-shaped tube principle, travels upward in the annular space between the annular outer barrel and the side wall of the reactor housing and flows out of the reactor through an outlet pipe. In other words, a gas phase outlet is provided at a top portion of the reactor, the liquid overflows out of the reactor from an outlet pipe on the side, and the solid catalyst flows out of the separator under the action of the density difference, achieving three-phase separation. This type of three-phase separator is called an equidirectional built-in three-phase separator.

However, such equidirectional built-in three-phase separators of the prior arts still exist a certain amount of gas phase inflow at liquid-solid deflecting location (between the annular outer barrel and the reactor housing), the bubble tail vortex action will cause turbulence in the catalyst particles, affecting solid-liquid separation effect. Millimeter-scale bubbles rise faster, while hundred-micrometer-scale bubbles rise slower and will be affected by larger bubbles and undergo disordered radial motion. Bubbles in current fluidized bed reactors are generally millimeter-scale, to reduce the influence of bubble inflow in vertical direction on separation and to prevent gas from bubbling up, a guiding structure is added to the cylindrical reactor, or the reactor inner diameter is enlarged at built-in separator location, i.e., an expansion-type equidirectional built-in three-phase separator type is utilized. The guiding structure is an annular protrusion structure provided on the inner wall of the reactor housing, the guiding structure has a trapezoidal or arc-shape in a longitudinal section along a reactor axis. The guiding structure can make vertical rising of the gas phase avoid the liquid-solid deflecting region as much as possible, which can reduce an entrained amount of catalyst to a certain extent. However, the liquid-solid separation still cannot avoid the influence of gas bubbling up, and such structural design is relatively complex and has a high investment cost.

Therefore, a gas-liquid-solid three-phase separator and a fluidized bed reactor including the separator are desired to effectively avoid the influence of rising gas on the liquid-solid separation efficiency.

The information disclosed in this Background section is only for enhancing understanding of the general background of the invention and should not be taken as an acknowledgment or implication in any form that the information constitutes the prior art that is well known to those skilled in the art.

### Summary of the Invention

The purpose of the invention is to provide a three-phase separator and a fluidized bed reactor using the separator, by means of a structural design of a paperclip-type reverse directional built-in three-phase separator, the influence of gas bubbling up on the liquid-solid separation efficiency can be effectively avoided.

To achieve the above objectives, according to a first aspect of the invention, a three-phase separator is provided, disposed in a fluidized bed reactor and used for gas-liquid-solid three-phase separation, comprising: an outer housing; a central guide barrel disposed in the outer housing and configured to receive gas-liquid-solid material; an outer guide barrel disposed radially outside of the central guide barrel; an upper sealing baffle extending radially between the central guide barrel and the outer guide barrel and being hermetically connected with a top end of the central guide barrel and a top end of the outer guide barrel; an overflow guide barrel disposed between the central guide barrel and the outer guide barrel, there is a gap between a top end of the overflow guide barrel and the upper sealing baffle; a lower sealing baffle extending radially between the outer guide barrel and the overflow guide barrel and being hermetically connected with a bottom end of the outer guide barrel and a bottom portion of the overflow guide barrel; and a liquid outlet pipe extending radially outward from a bottom portion of the outer guide barrel to outside of the outer housing above the lower sealing baffle and configured to discharge separated liquid.

According to a further example of the invention, the upper sealing baffle is disposed to incline downward in a radially outward direction relative to a vertical central axis of the outer housing.

According to a further example of the invention, the three-phase separator further comprises an annular bubble baffle extending inclined downward in a radially outward direction from a bottom end of the central guide barrel relative to a vertical central axis of the outer housing.

According to a further example of the invention, the three-phase separator further comprises a liquid baffle extending inclined downward from an inner wall of the outer guide barrel toward a direction away from the liquid outlet pipe within a certain circumferential range directly above the liquid outlet pipe.

According to a further example of the invention, the three-phase separator further comprises a guide buffer baffle disposed at a bottom portion of a third annular space between the overflow guide barrel and the central guide barrel, adjacent to and below the liquid outlet pipe, and disposed to incline downward toward the liquid outlet pipe from a distal side away from the liquid outlet pipe.

According to a further example of the invention, the guide buffer baffle is provided with a plurality of holes being in fluid communication with an annular inflation space defined between the guide buffer baffle and the lower sealing baffle, the three-phase separator further comprises an inflation pipe extending radially outward from the outer guide barrel to outside of the outer housing and being in fluid communication with the annular inflation space, and configured to guide gas into the annular inflation space, so that bubbles generated at the holes form turbulence on liquid phase material on the guide buffer baffle.

According to a further example of the invention, the guide buffer baffle is inclined at an angle between 5° and 20° relative to a horizontal plane perpendicular to a vertical central axis of the outer housing.

According to a further example of the invention, the three-phase separator further comprises an exhaust pipe extending upward from the upper sealing baffle to above a liquid level of the three-phase separator near the central guide barrel.

According to a further example of the invention, a plurality of exhaust pipes are disposed in a form of an annular array around the vertical central axis of the outer housing.

According to another aspect of the invention, a fluidized bed reactor is provided, comprising: a reactor housing and the three-phase separator, the three-phase separator is disposed in an upper portion of the fluidized bed reactor, and the outer housing of the three-phase separator is part of the reactor housing.

According to a further example of the invention, the reactor housing comprises: a cylindrical portion, an upper end cap and a lower end cap, a gas outlet is provided at the upper end cap, and a feed inlet is provided at a center of the lower end cap.

According to a further example of the invention, the fluidized bed reactor further comprises a gas-liquid distributor disposed in a lower space of the reactor housing.

According to a further example of the invention, the upper end cap is provided with a solid catalyst particle charging port; and the lower end cap is provided with a solid catalyst particle discharging port.

According to a further example of the invention, the fluidized bed reactor further comprises a guiding portion disposed below the annular bubble baffle of the three-phase separator and circumferentially disposed around an inner wall of the reactor housing, the guiding portion cooperating with the annular bubble baffle to prevent bubbles in the gas-liquid-solid material from entering a first annular space between the outer guide barrel and the reactor housing.

According to a further example of the invention, the guiding portion comprises an annular baffle extending inclined downward in a radially inward direction from the inner wall of the reactor housing relative to a vertical central axis of the outer housing.

According to the invention, the gas-liquid-solid material travels upward along a central flow region defined by the central guide barrel, undergoes gas-phase separation at the liquid level above the central guide barrel, and separated gas is discharged via the gas outlet. The liquid-solid mixture undergoes a first deflection in a first deflection region above the top end of the central guide barrel, enters a first annular space (also called a liquid-solid descending region) between the outer guide barrel and the outer housing along an upper surface of the upper sealing baffle, and travels downward along the first annular space. The liquid-solid mixture undergoes a second deflection in a second deflection region below the lower sealing baffle. Due to the density difference between the liquid and solid, the liquid-solid mixture undergoes liquid-solid separation below the outer guide barrel, and separated solid catalyst particles leave the three-phase separator and return to a solid catalyst particle bed layer. The liquid and a small amount of entrained solid catalyst particles enter a second annular space (also called an overflow region) between the outer guide barrel and the overflow guide barrel along a lower surface of the lower sealing baffle, and travel upward along the second annular space. The liquid undergoes a third deflection in a third deflection region above the top end of the overflow guide barrel, passes through a gap between the top end of the overflow guide barrel and the upper sealing baffle, enters a third annular space (also called a liquid outflow region) between the central guide barrel and the overflow guide barrel along a lower surface of the upper sealing baffle, and travels downward along the third annular space. Due to impingement of the liquid with the lower surface of the upper sealing baffle, unseparated solids undergo further separation.

According to the invention, the liquid entering the third annular space is blocked by the liquid baffle to avoid being directly discharged from the liquid outlet pipe, instead, is guided by the liquid baffle to the distal side of the guide buffer baffle away from the liquid outlet pipe. The liquid flows downward toward the liquid outlet pipe from the distal side away from the liquid outlet pipe and is discharged uniformly from the liquid outlet pipe.

According to the invention, the inflation pipe can periodically or continuously guide gas into the annular inflation space between the guide buffer baffle and the lower sealing baffle, so that the bubbles generated at the holes form turbulence on the liquid phase material on the guide buffer baffle, to prevent solid residues from depositing on the guide buffer baffle.

According to the invention, the guiding portion utilizes an annular baffle extending inclined downward in a radially inward direction from the inner wall of the reactor housing relative to the vertical central axis of the outer housing, so that bubble accumulation will occur in a space between the annular baffle and the side wall of the reactor housing and form large bubble cavities, forming a gas film and liquid film contact state, thereby reducing wear on solid catalyst particles.

Compared with the prior art, the invention has the following beneficial effects:
1) The invention achieves a "reverse directional" material flow direction (i.e., a paperclip flow direction) by means of the "three-barrel nested" structural design, so that material traveling upward along the central guide barrel is directly deflected into the first annular space between the outer guide barrel and the side wall of the reactor housing, thus increasing a radial travel of the first deflection compared to the "equidirectional" material flow direction of the prior arts. The liquid-solid mixture undergoes the second deflection in the second deflection region below the lower sealing baffle, entering the second annular space between the outer guide barrel and the overflow guide barrel along the lower surface of the lower sealing baffle, thus increasing the radial travel of the second deflection. Furthermore, gas is less likely to bubble up at the liquid-solid separation region. Additionally, because the invention employs the "reverse directional" material flow direction, even if some bubbles rise from the gap between the annular bubble baffle and the outer housing, due to the fact that their rising direction is opposite to the flow direction of the liquid outflow region, it is less likely for the solid phase to flow out of the reactor along with the liquid phase. The inventors have proved by experiments that, compared with the prior art expansion-type reactor (i.e., the design of the reactor with a larger radial dimension at the three-phase separator), in the event that the cylindrical reactor of the invention is utilized, the effect of preventing bubbles from bubbling up is better; based on the fluid dynamics principle that bubbles tend to rise in a straight line, the "reverse directional" of the material flow direction in the invention achieve interchange of two deflection regions with "equidirectional" flow in the prior arts, which can effectively prevent bubbles from entering the liquid-solid separation space and interfering with the liquid-solid separation, therefore, it can effectively maintain the long-term stability of the separation efficiency of the three-phase separator.
2) To solve uneven problem of liquid outflow, the liquid phase material after the third deflection is guided to the liquid outlet pipe via a guide buffer unit. The liquid baffle of the guide buffer unit extends inclined downward from an inner wall of the outer guide barrel toward a direction away from the liquid outlet pipe within a certain circumferential range directly above the liquid outlet pipe, this can effectively mitigate the liquid phase material after the third deflection from excessively rapid intake into the liquid outlet pipe; the guide buffer baffle of the guide buffer unit is disposed at the bottom portion of the third annular space between the central guide barrel and the overflow guide barrel, and inclines downward towards the liquid outlet pipe from a distal side away from the liquid outlet pipe, to receive liquid inflow from the liquid baffle and guides the liquid from the distal side away from the liquid outlet pipe towards the liquid outlet pipe, and to be uniformly discharged from the liquid outlet pipe.
3) Anti-deposition portion of the invention is an annular inflation space for generating bubbles located at the lower portion of the guide buffer baffle, after the annular inflation space is filled with gas, the gas can be controlled to enter the liquid outflow region, so that the bubbles generated at the holes form turbulence on the liquid phase material on the guide buffer baffle, to prevent solid residues from depositing on the guide buffer baffle.
4) The guiding portion of the invention can be provided as a baffle-type structure. The protrusion structure needs to withstand pressure under high-pressure conditions. Therefore, compared to the annular protrusion structure, utilizing the baffle-type structure does not require to consider pressure bearing and is a preferred structure. The annular baffle extends inclined downward in a radially inward direction from the inner wall of the reactor housing relative to the vertical central axis of the outer housing, thus bubble accumulation will occur in a space between the annular baffle and the side wall of the reactor housing and form large bubble cavities, forming a gas film and liquid film contact state, thereby reducing wear on solid catalyst particles.

Further areas of applicability of the present disclosure will become apparent from the detailed description, the claims and the drawings. The detailed description and specific examples are intended for purposes of illustration only and are not intended to limit the scope of the disclosure.

### Brief Description of Drawings

The present disclosure will become more fully understood from the detailed description and the accompanying drawings
FIG.1 is a sectional structural schematic view of a cylindrical equidirectional built-in three-phase separator in a prior art fluidized bed reactor.
FIG.2 is a sectional structural schematic view of a cylindrical reverse directional built-in three-phase separator according to an example of the invention.
FIG.3 is a perspective structural schematic view of a three-phase separator according to an example of the invention.
FIG.4 is a perspective structural schematic view of a guide buffer baffle and anti-deposition portion of a three-phase separator according to an example of the invention.
FIG.5 is a sectional structural schematic view of a fluidized bed reactor according to an example of the invention.
FIG.6 is a perspective structural schematic view of a fluidized bed reactor according to an example of the invention.

### Detailed Description of Embodiments

Specific embodiments of the invention will be described in detail below in conjunction with the accompanying drawings, but it should be understood that the protection scope of the invention is not limited by the specific embodiments.

Unless expressly stated otherwise, throughout the specification and claims, the term "comprise" or variations thereof such as "includes" or "having" and the like will be understood to include the stated elements or constituent parts, but not exclude other elements or other constituent parts.

For the convenience of description, spatially relative terms, such as "below", "beneath", "lower", "on", "above", "upper", etc., may be used herein to describe the relationship of one element or feature and another element or feature in the drawings. It should be understood that the spatially relative terms are intended to encompass different orientations of the item in use or operation in addition to the orientation depicted in the figures. For example, if an item in the figures is turned over, elements described as "below" or "beneath" other elements or features would then be oriented "above" the elements or features. Thus, the exemplary term "below" can encompass both an orientation of below and above. Items may be otherwise oriented (rotated 90 degrees or otherwise) and the spatially relative terms used herein should be interpreted accordingly.

The terms "first", "second", etc., are used herein to distinguish two different elements or parts, and are not used to define specific positions or relative relationships. In other words, in some embodiments, the terms "first", "second", etc., may also be interchanged with each other.

FIG.1 illustrates a prior art fluidized bed reactor 100A for a gas-liquid-solid three-phase reaction, comprising an inner barrel 1A and an outer barrel 2A. A gas-liquid mixture charging material from a bottom portion of the reactor contacts with solid catalyst particles disposed in a middle-lower portion of the reactor for catalytic reaction. The gas-liquid-solid three-phase material continues to travel upward and enters a three-phase separator. The prior art three-phase separator is disposed in an upper-middle portion of the reactor for gas-liquid-solid three-phase separation. The material flow direction of this prior art three-phase separator is as follows: the gas-liquid-solid mixture travels upward within the annular inner barrel 1A, undergoes gas-phase separation at an upper gas-liquid interface; thereafter, the liquid-solid mixture fluid flows radially outward into a region between the annular outer barrel 2A and the inner barrel 1A, and travels downward; in a region below the annular outer barrel 2A, due to density difference between solid and liquid, the solid separates from the liquid and flows out of the separator, returning to a main reaction region; the remaining liquid, under the action of "U"-shaped tube principle, travels upward in an annular space between the annular outer barrel 2A and a side wall of the reactor housing and flows out of the reactor through an outlet pipe 3A. In other words, a gas phase outlet 4A is disposed at top portion of the reactor, the liquid phase overflows out of the reactor at an outlet pipe 3A on the side, and the solid catalyst flows out of the separator under the action of density difference, thus achieving three-phase separation. This type of three-phase separator is called a cylindrical equidirectional built-in three-phase separator. "Equidirectional" means that the rising direction of the incoming bubbles is the same as the direction of the liquid in the liquid outflow region. Referring to the arrow direction at the three-phase separator in FIG.1, the material travels upward along the inner barrel 1A, then enters the annular space between the inner barrel 1A and the outer barrel 2A and travels downward, after liquid-solid separation, the liquid phase travels upward along the annular space between the outer barrel 2A and the side wall of the reactor housing, the liquid phase overflows out of the reactor 100A when it rises to the outlet pipe 3A.

The inventors discovered by research that, the prior art equidirectional built-in three-phase separators typically are difficult to achieve satisfactory return rate of solid phase particle (solid catalyst particle) and maintain stable and efficient separation efficiency. The prior art cylindrical three-phase separators are difficult to avoid that bubbles enter the three-phase separator from the gap between the inner barrel 1A and the side wall of the reactor housing, the region that bubbles enter is the liquid-solid separation region and the liquid outflow region. When gas enters the liquid-solid separation region (i.e., the region between a lower end of the inner barrel 1A and the side wall of the reactor housing in FIG.1), the rising bubbles will disrupt the normal separation and settling process of the liquid-solid separation region, the rising direction of the bubbles is the same as the direction of liquid flow out of the reactor (i.e., traveling upward in the annular space between the outer barrel 2A and the side wall of the reactor housing in FIG.1), easily causing the solid phase to flow out of the reactor along with the liquid phase, thus deteriorating separation effect. Expansion-type three-phase separators can reduce bubble intrusion to some extent compared to cylindrical three-phase separators, but they are more difficult to apply in engineering, have complex designs, are more expensive, and are also difficult to prevent bubble intrusion.

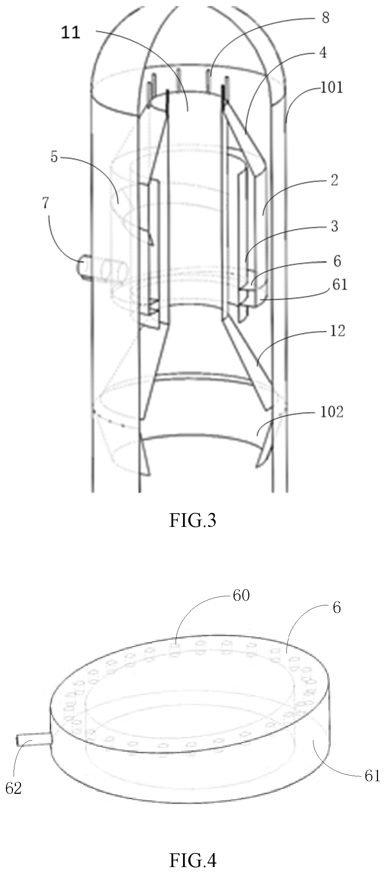

To address the problems in the prior art, as shown in FIGS.2 and 3, the invention provides a three-phase separator utilizing a structural design of "reverse directional" flow path, which is disposed in an upper portion of a fluidized bed reactor and is used for gas-liquid-solid three-phase separation. The three-phase separator includes: an outer housing 101, a central guide barrel 11, an outer guide barrel 2, and an overflow guide barrel 3. The central guide barrel 11 is disposed in the outer housing 101 and configured to receive gas-liquid-solid material. The outer guide barrel 2 is disposed radially outside of the central guide barrel 11, thereby forming a first annular space between the outer guide barrel 2 and the outer housing 101. An upper sealing baffle 4 extends radially between the central guide barrel 11 and the outer guide barrel 2 and is hermetically connected with a top end of the central guide barrel 11 and a top end of the outer guide barrel 2. The overflow guide barrel 3 is disposed between the central guide barrel 11 and the outer guide barrel 2, thereby forming a second annular space between the outer guide barrel 2 and the overflow guide barrel 3, and forming a third annular space between the overflow guide barrel 3 and the central guide barrel 11. There is a gap between a top end of the overflow guide barrel 3 and the upper sealing baffle 4. A lower sealing baffle 63 extends radially between the outer guide barrel 2 and the overflow guide barrel 3 and is hermetically connected with a bottom end of the outer guide barrel 2 and a bottom portion of the overflow guide barrel 3. As shown in FIG.2, the lower sealing baffle 63 is connected to the overflow guide barrel 3 at a certain distance above the bottom end of the overflow guide barrel 3, so that the bottom end of the overflow guide barrel 3 protrudes downward from the lower sealing baffle 63 by a certain distance, this can further block bubble incoming and facilitate liquid-solid separation. However, it should be understood that the lower sealing baffle 63 can also be connected to the overflow guide barrel 3 at the bottom end of the overflow guide barrel 3 without departing from the scope of the invention. A liquid outlet pipe 7 extends radially outward from a bottom portion of the outer guide barrel 2 to outside of the outer housing above the lower sealing baffle 63 and is configured to discharge separated liquid.

The central guide barrel 11 receives the gas-liquid material, along with entrained solid catalyst particles, traveling upward from a bottom portion of the reactor 100, the gas phase separates at a liquid level B of the reactor, and the liquid-solid material undergoes a first deflection on the top of the central guide barrel 11. The outer guide barrel 2 is disposed radially outside of the central guide barrel 11, the liquid-solid material after the first deflection travels downward in the first annular space between the outer guide barrel 2 and the side wall of the reactor housing. The overflow guide barrel 3 is disposed between the central guide barrel 11 and the outer guide barrel 2, liquid-solid material separation and a second deflection of the liquid phase material occur below the lower sealing baffle 63; the liquid phase material after the second deflection travels upward in the second annular space between the outer guide barrel 2 and the overflow guide barrel 3 (based on the U-shaped tube principle), the liquid phase material undergoes a third deflection of liquid phase material at an upper end of the overflow guide barrel 3, the liquid phase material after the third deflection travels downward in the third annular space between the overflow guide barrel 3 and the central guide barrel 11, and is discharged from the liquid outlet pipe 7 located at a lower portion of a wall of the outer guide barrel 2. Compared to the prior art, the invention utilizes a form of "three-barrel nested" structure and changes material flow direction (see FIG.2), which material flow direction is similar to a "paperclip" and is significantly different from the "equidirectional" material flow direction of the prior arts. The material flow direction of the invention utilizes a "reverse directional" material flow direction based on the "three-barrel nested" structure, that is to say, the rising direction of the incoming bubbles is opposite to the direction of the liquid traveling downward in the liquid outflow region.

As further shown in FIGS.2 and 3, the top end of the central guide barrel 11 is connected with the top end of the outer guide barrel 2 by the upper sealing baffle 4. According to an example of the invention, the upper sealing baffle 4 may be disposed to incline downward in a radially outward direction relative to the vertical central axis 110 of the outer housing 101. Utilizing the upper sealing baffle 4 inclined downward can better guide material from the central guide barrel 11 directly into the first annular space between the outer guide barrel 2 and the sidewall of the outer housing 101/reactor housing. According to an example of the invention, the upper sealing baffle 4 is inclined at an angle between 5° and 45° relative to the horizontal plane perpendicular to the vertical central axis 110 of the outer housing 101, preferably inclined at an angle between 10° and 30°. It should be understood that the upper sealing baffle 4 may be inclined at any suitable angle relative to the horizontal plane perpendicular to the vertical central axis 110 of the outer housing 101 without departing from the scope of the invention.

As further shown in FIGS.2 and 3, the three-phase separator may also comprise an annular bubble baffle 12 extending inclined downward in a radially outward direction from a bottom end of the central guide barrel 11 relative to the vertical central axis 110 of the outer housing 101. According to an example of the invention, the annular bubble baffle 12 may extend to a radial position between the outer guide barrel 2 and the outer housing 101. Therefore, even if some bubbles bubbling up reach the liquid-solid separation region, the bubbles are difficult to continue to travel upward and affect the liquid-solid separation because straight rising path of the bubbles is interrupted. The central guide barrel 11 and the annular bubble baffle 12 may be integrally formed. However, it should be understood that the central guide barrel 11 and the annular bubble baffle 12 may also be formed separately and fixed together, for example, by welding, without departing from the scope of the invention.

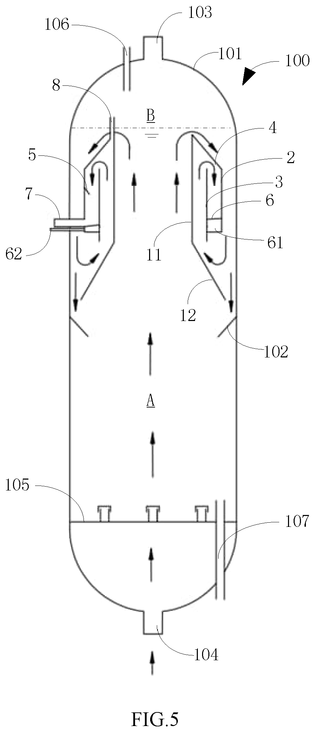

According to an example of the invention, the three-phase separator may further comprise an exhaust pipe 8 extending upward from the upper sealing baffle 4 to above a liquid level B of the three-phase separator near the central guide barrel 11. The exhaust pipe 8 may be a plurality of exhaust pipes disposed in a form of an annular array around the vertical central axis 110 of the outer housing 101. However, it should be understood that the exhaust pipes 8 may also take other forms without departing from the scope of the invention. It should be understood that a single exhaust pipe 8 may also be used without departing from the scope of the invention. An outlet of the exhaust pipe 8 is located above the liquid level of the three-phase separator (refer to FIG.5). The array arrangement of the exhaust pipes 8 can prevent gas from entering the overflow region through a catalyst return port (i.e., the gap between the annular bubble baffle 12 and the outer housing 101), thus causing cavities.

The inventors discover by further research that the size of the liquid outlet of the prior art "equidirectional" three-phase separator (refer to FIG.1) does not match relative to the volume of the annular gap/space formed between the outer barrel and the side wall of the reactor housing, the region directly below the liquid outlet is the main outflow region, while the fluid in the region farther from the outlet is approximately stationary, and the outflow from the annular space is not uniform.

To solve uneven problem of outflow from the annular space, the invention proposes that the liquid phase material after the third deflection be discharged to the liquid outlet pipe 7 by a guide buffer unit, which comprises a liquid baffle 5 and a guide buffer baffle 6. Specifically, referring to FIG.2 to FIG.4, the three-phase separator may further comprise the liquid baffle 5 extending inclined downward from an inner wall of the outer guide barrel 2 toward a direction away from the liquid outlet pipe 7 within a certain circumferential range directly above the liquid outlet pipe 7. According to an example of the invention, the liquid baffle 5 may circumferentially extend 30%-60% of a circumference of the inner wall of the outer guide barrel 2, preferably 40%-50%. It should be understood that the liquid baffle 5 may circumferentially extend by any suitable proportion of the circumference of the inner wall of the outer guide barrel 2 without departing from the scope of the invention. The three-phase separator may further comprise a guide buffer baffle 6 disposed at a bottom portion of the third annular space, adjacent to and below the liquid outlet pipe 7, and disposed to incline downward toward the liquid outlet pipe 7 from a distal side away from the liquid outlet pipe 7.

Liquid entering the third annular space is blocked by the liquid baffle 5 to prevent from being directly discharged from the liquid outlet pipe 7, instead, is guided by the liquid baffle 5 to the distal side of the guide buffer baffle 6 away from the liquid outlet pipe 7, the liquid flows downward towards the liquid outlet pipe 7 from the distal side away from the liquid outlet pipe 7 and is uniformly discharged from the liquid outlet pipe 7. Preferably but without limiting, as shown in FIG.2, the liquid baffle 5 is inclined at an angle between 40° and 80° relative to the horizontal plane perpendicular to the vertical central axis 110 of the outer housing 101, preferably inclined at an angle between 60° and 70°; the guide buffer baffle 6 is inclined at an angle between 5° and 20° relative to the horizontal plane perpendicular to the vertical central axis 110 of the outer housing 101. However, it should be understood that those skilled in the art can use any other suitable inclination angle for the liquid baffle 5 and the guide buffer baffle 6 without departing from the scope of the invention. The uniformity of the outflow from the third annular space is also a key factor in the stable and long-term performance of the three-phase separator. The liquid baffle 5 disposed in the third annular space between the central guide barrel 11 and the overflow guide barrel 3 and the guide buffer baffle 6 disposed in the bottom portion can avoid that local flow field velocity in the third annular space is too fast, can effectively solve the problem of outflow uniformity in the third annular space, and help maintain the stability of the separation efficiency of the solid-liquid separation region.

As further shown in FIGS.2 to 4, a bottom portion of the guide buffer baffle 6 may be provided with an anti-deposition portion, which is integrally formed with the guide buffer baffle 6 and the lower sealing baffle 63 and is an annular inflation space 61 (refer to FIG.4) closed at bottom. The guide buffer baffle 6 is provided with a plurality of holes 60, which are in fluid communication with the annular inflation space 61 defined between the guide buffer baffle 6 and the lower sealing baffle 63. The anti-deposition portion of the three-phase separator further comprises an inflation pipe 62 extending radially outward from the outer guide barrel 2 to outside of the outer housing and being in fluid communication with the annular inflation space 61, and configured to guide gas into the annular inflation space 61, so that bubbles generated at the holes 60 form turbulence on liquid phase material on the guide buffer baffle 6.

Because the guide buffer baffle 6 utilized by the invention is an inclined annular plate, the liquid located at the distal side away from the liquid outlet pipe 7 has the potential energy to flow towards the liquid outlet pipe 7, playing the role of making liquid flow velocity in the third annular space at the liquid outlet pipe 7 be uniform. The anti-deposition portion is an annular inflation space for generating bubbles located below the guide buffer baffle 6, gas enters the annular inflation space 61 through the inflation port 62. After the annular inflation space 61 is filled with gas, the gas can enter the liquid outflow region (i.e., above the inclined surface of the guide buffer baffle 6) through an optional one-way gas control valve (not shown in drawings), the generated bubbles enhance the turbulence of the liquid at the guide buffer baffle 6, to prevent solid residues from depositing on the guide buffer baffle 6, thus playing the role of preventing coking.

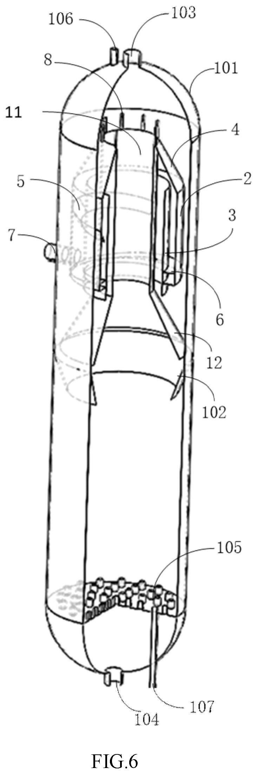

As shown in FIGS.5 and 6, a fluidized bed reactor 100 is provided, which is provided with the three-phase separator according to the invention. Specifically, the reactor housing has a cylindrical structure, including a cylindrical portion, an upper end cap, and a lower end cap. The outer housing 101 of the three-phase separator is part of the cylindrical portion of the reactor housing. The upper end cap (preferably at a center thereof) is provided with a gas outlet 103, and a feed inlet 104 is provided at a center of the lower end cap.

The fluidized bed reactor 100 may further comprise a gas-liquid distributor 105 disposed in a lower space of the reactor housing. The upper end cap is provided with a solid catalyst particle charging port 106, and the lower end cap is provided with a solid catalyst particle discharging port 107.

As further shown in FIGS.5 and 6, a guiding portion may be provided at a corresponding position at a lower end of the annular bubble baffle 12 of the three-phase separator, which cooperates with the annular bubble baffle 12 to prevent bubbles in the gas-liquid-solid material from entering the first annular space between the outer guide barrel 2 and the reactor housing. This guiding portion is an annular protrusion structure or a baffle-type structure arranged circumferentially around the inner wall of the reactor housing. The annular protrusion structure may utilize, for example, a trapezoidal or arc-shaped structure, considering that the annular protrusion structure needs to withstand pressure under high-pressure conditions. Compared to the annular protrusion structure, as shown in FIG.5 and FIG.6, according to an example of the invention, the guiding portion may include an annular baffle 102, which may extend inclined downward in a radially inward direction from the inner wall of the reactor housing relative to the vertical central axis 110 of the outer housing 101. According to an example of the invention, the annular baffle 102 may be inclined relative to the horizontal plane perpendicular to the vertical central axis 110 of the outer housing 101 at an angle between 40° and 80°, preferably at an angle between 60° and 70°. However, it should be understood that the annular baffle 102 may be inclined relative to the horizontal plane perpendicular to the vertical central axis 110 of the outer housing 101 at any other suitable angle without departing from the scope of the invention.

The operation of the fluidized bed reactor will now be described in detail in connection with the material flow direction within the fluidized bed reactor of the invention:
At first, various regions of the three-phase separator disposed within the fluidized bed reactor 100 are described: the central guide barrel 11 constitutes a central guide region of the three-phase separator; the first annular space between the outer guide barrel 2 and the side wall of the reactor housing constitutes a liquid-solid descending region; the second annular space between the overflow guide barrel 3 and the outer guide barrel 2 constitutes an overflow region; and the third annular space between the overflow guide barrel 3 and the central guide barrel 11 constitutes a liquid outflow region, which is a clean liquid product collection region. A region above the upper sealing baffle 4 is a first deflection region, a region below the lower sealing baffle 63 is a second deflection region, and a region above the upper end of the overflow guide barrel 3 is a third deflection region.

The gas-liquid mixture material enters the gas-liquid distributor 105 through the feed inlet 104 at the bottom portion of the reactor, and then enters the catalyst bed layer A (the catalyst is solid catalyst particles), undergoes a gas-liquid-solid three-phase reaction in a middle-lower portion of the reactor; after the reaction, the gas-liquid-solid three-phase mixture flows upward and enters the three-phase separator; the three-phase separator is divided into the central flow region, the first deflection region, the liquid-solid descending region, the second deflection region, the overflow region, the third deflection region, and the liquid outflow region in order. According to the invention, the gas-liquid-solid material travels upward along the central flow region defined by the central guide barrel 11, and undergoes gas phase separation at the liquid level above the central guide barrel 11, and separated gas is discharged via the gas outlet 103. The liquid-solid mixture undergoes a first deflection in the first deflection region above the upper sealing baffle 4, enters the first annular space (also called the liquid-solid descending region) between the outer guide barrel 2 and the outer housing 101 along the upper surface of the upper sealing baffle 4, and travels downward along the first annular space. The liquid-solid mixture undergoes a second deflection in the second deflection region below the lower sealing baffle 63. Due to the density difference between liquid and solid, the liquid-solid mixture undergoes liquid-solid separation below the outer guide barrel 2. Separated solid catalyst particles leave the three-phase separator and return to the solid catalyst particle bed layer A. The liquid and a small amount of entrained solid catalyst particles enter the second annular space (also called the overflow region) between the outer guide barrel 2 and the overflow guide barrel 3 along the lower surface of the lower sealing baffle 63, and travel upward along the second annular space. The liquid undergoes a third deflection in the third deflection region above the top end of the overflow guide barrel 3, passes through the gap between top end of the overflow guide barrel 3 and the upper sealing baffle 4, enters the third annular space (also called the liquid outflow region) between the central guide barrel 11 and the overflow guide barrel 3 along the lower surface of the upper sealing baffle 4, and travels downward along the third annular space. Due to impingement of the liquid with the lower surface of the upper sealing baffle 4, unseparated solids undergo further separation.

The liquid-solid two-phase separation is mainly completed in the second deflection region, the liquid flows into the third deflection region under the action of "U"-shaped tube principle, enters the liquid outflow region after undergoing further separation in the third deflection region, and flows out of the reactor through the liquid outlet pipe 7. Specifically, the gas-liquid-solid three-phase mixture first flows upward through the central guide region via the annular bubble baffle 12 of the central guide barrel 11, where flow area gradually decreases and the mixture flow velocity increases, forming a jet flow at the liquid level interface of the three-phase separator (i.e., the reactor liquid level B), gas is separated here and discharged by the gas outlet 103. The liquid-solid material overflows over the central guide barrel 11 and enters the first deflection region, then flows into the liquid-solid descending region, undergoes liquid-solid separation in the second deflection region, and separated catalyst is returned to the reaction region (solid catalyst particle bed layer) through the return port. The clean liquid obtained after separation enters the clean liquid collection region through the second deflection region. A top portion of the overflow region is provided with an exhaust pipe 8 to prevent gas from mixing into the overflow region through the catalyst return port and causing cavities. After the liquid passes through the liquid baffle 5 and the lower guide buffer baffle 6 to adjust the flow field, it flows out of the reactor by the liquid outlet pipe 7.

The invention achieves the "reverse directional" material flow direction (paperclip flow direction) by means of the "three-barrel nested" structural design, increases the radial travel of the first deflection and the second deflection, so that the material in the central guide barrel 11 is directly deflected into the first annular space between the outer guide barrel 2 and the side wall of the reactor housing, consequently, the radial travel of the second deflection is also effectively increased compared to prior arts, thus gas is less likely to bubble up in the liquid-solid separation region. Furthermore, because the invention utilizes the "reverse directional" material flow direction, even if some bubbles rise, due to the fact that their rising direction is opposite to the direction of liquid outflow from the three-phase separator/reactor, it is less likely for solid phase to flow out of the three-phase separator/reactor along with the liquid phase. In addition, the invention utilizes a cylindrical reactor, which provides better effect for preventing bubble bubbling up than the prior art expansion-type reactors. Furthermore, while the invention utilizes a cylindrical reactor, the invention can also be applied to an expansion-type reactor without departing from the scope of the invention.

To solve uneven problem of liquid outflow, the liquid phase material after the third deflection is guided to the liquid outlet pipe 7 via a guide buffer unit. The liquid baffle 5 of the guide buffer unit extends inclined downward from the inner wall of the outer guide barrel 2 toward a direction away from the liquid outlet pipe 7 within a certain circumferential range directly above the liquid outlet pipe 7, this can effectively mitigate the liquid phase material after the third deflection from excessively rapid intake into the liquid outlet pipe 7; the guide buffer baffle 6 of the guide buffer unit is disposed at the bottom portion of the third annular space between the central guide barrel 11 and the overflow guide barrel 3, and inclines downward towards the liquid outlet pipe 7 from a distal side away from the liquid outlet pipe 7, to receive liquid inflow from the liquid baffle 5 and guides the liquid from the distal side away from the liquid outlet pipe 7 towards the liquid outlet pipe 7, and to be uniformly discharged from the liquid outlet pipe 7.

After the annular inflation space 61 is filled with gas, the gas can be controlled to enter the liquid outflow region, so that the bubbles generated at the holes 60 form turbulence on the liquid phase material on the guide buffer baffle 6, to prevent solid residues from depositing on the guide buffer baffle 6.

Compared to the annular protrusion structure, the annular baffle 102 extends inclined downward in a radially inward direction from the inner wall of the reactor housing relative to the vertical central axis 110 of the outer housing 101, thus bubble accumulation will occur in a space between the annular baffle 102 and the side wall of the reactor housing and form large bubble cavities, forming a gas film and liquid film contact state, thereby reducing wear on solid catalyst particles.

The preferred embodiments of the invention have been described in detail above with reference to the accompanying drawings, however, the invention is not limited thereto. Within the scope of the technical concept of the invention, various simple modifications can be made to the technical solution of the invention, including combinations of respective specific technical features in any suitable manner. In order to avoid unnecessary repetition, various possible combinations are not further described in the invention. However, these simple modifications and combinations should also be regarded as the content disclosed by the invention, and all belong to the protection scope of the invention.

### List of reference numerals

1A: Inner barrel;
2A: Outer barrel;
3A: Liquid outlet pipe;
4A: Gas outlet;
100A: Prior art fluidized bed reactor;
2: External guide barrel;
3: Overflow guide barrel;
4: Upper sealing baffle;
5: Liquid baffle;
6: Guide buffer baffle;
7: Liquid outlet pipe;
8: Exhaust pipe;
11: Central guide barrel;
12: Annular bubble baffle;
60: Hole;
61: Annular inflation space;
62: Inflation pipe;
63: Lower sealing baffle;
100: Fluidized bed reactor;
101: Outer housing;
102: Annular baffle;
103: Gas outlet;
104: Feed inlet;
105: Gas-liquid distributor;
106: Solid catalyst particle charging port;
107: Solid catalyst particle discharging port;
110: Vertical central axis;
A: Solid catalyst particle bed layer;
B: Liquid level of the three-phase separator.

## Claims

1. A three-phase separator, comprising:
an outer housing (101);
a central guide barrel (11) disposed in the outer housing (101) and configured to receive gas-liquid-solid material;
an outer guide barrel (2) disposed radially outside of the central guide barrel (11);
an upper sealing baffle (4) extending radially between the central guide barrel (11) and the outer guide barrel (2) and being hermetically connected with a top end of the central guide barrel (11) and a top end of the outer guide barrel (2);
an overflow guide barrel (3) disposed between the central guide barrel (11) and the outer guide barrel (2), there is a gap between a top end of the overflow guide barrel (3) and the upper sealing baffle (4);
a lower sealing baffle (63) extending radially between the outer guide barrel (2) and the overflow guide barrel (3) and being hermetically connected with a bottom end of the outer guide barrel (2) and a bottom portion of the overflow guide barrel (3); and
a liquid outlet pipe (7) extending radially outward from a bottom portion of the outer guide barrel (2) to outside of the outer housing above the lower sealing baffle (63) and configured to discharge separated liquid.

2. The three-phase separator according to claim 1, **characterized in that** the upper sealing baffle (4) is disposed to incline downward in a radially outward direction relative to a vertical central axis (110) of the outer housing (101).

3. The three-phase separator according to claim 1, **characterized in that** the three-phase separator further comprises an annular bubble baffle (12) extending inclined downward in a radially outward direction from a bottom end of the central guide barrel (11) relative to a vertical central axis (110) of the outer housing (101).

4. The three-phase separator according to claim 1, **characterized in that** the three-phase separator further comprises a liquid baffle (5) extending inclined downward from an inner wall of the outer guide barrel (2) toward a direction away from the liquid outlet pipe (7) within a certain circumferential range directly above the liquid outlet pipe (7).

5. The three-phase separator according to claim 4, **characterized in that** the three-phase separator further comprises a guide buffer baffle (6) disposed at a bottom portion of a third annular space between the overflow guide barrel (3) and the central guide barrel (11), adjacent to and below the liquid outlet pipe (7), and disposed to incline downward toward the liquid outlet pipe (7) from a distal side away from the liquid outlet pipe (7).

6. The three-phase separator according to claim 5, **characterized in that** the guide buffer baffle (6) is provided with a plurality of holes (60) being in fluid communication with an annular inflation space (61) defined between the guide buffer baffle (6) and the lower sealing baffle (63), the three-phase separator further comprises an inflation pipe (62) extending radially outward from the outer guide barrel (2) to outside of the outer housing and being in fluid communication with the annular inflation space (61), and configured to guide gas into the annular inflation space (61), so that bubbles generated at the holes (60) form turbulence on liquid phase material on the guide buffer baffle (6).

7. The three-phase separator according to claim 5, **characterized in that** the guide buffer baffle (6) is inclined at an angle between 5° and 20° relative to a horizontal plane perpendicular to a vertical central axis (110) of the outer housing (101).

8. The three-phase separator according to claim 2, **characterized in that** the three-phase separator further comprises an exhaust pipe (8) extending upward from the upper sealing baffle (4) to above a liquid level (B) of the three-phase separator near the central guide barrel (11).

9. The three-phase separator according to claim 8, **characterized in that** a plurality of exhaust pipes (8) are disposed in a form of an annular array around the vertical central axis (110) of the outer housing (101).

10. A fluidized bed reactor (100), comprising:
a reactor housing; and
the three-phase separator according to any one of claims 1 to 9, the three-phase separator is disposed in an upper portion of the fluidized bed reactor (100), and the outer housing of the three-phase separator is part of the reactor housing.

11. The fluidized bed reactor according to claim 10, **characterized in that** the reactor housing comprises: a cylindrical portion, an upper end cap and a lower end cap, the upper end cap is provided with a gas outlet (103), and a feed inlet (104) is provided at a center of the lower end cap.

12. The fluidized bed reactor according to claim 10, **characterized in that** the fluidized bed reactor further comprises a gas-liquid distributor (105) disposed in a lower space of the reactor housing.

13. The fluidized bed reactor according to claim 11, **characterized in that** the upper end cap is provided with a solid catalyst particle charging port (106); and the lower end cap is provided with a solid catalyst particle discharging port (107).

14. The fluidized bed reactor according to claim 10, **characterized in that** it further comprises a guiding portion disposed below the annular bubble baffle (12) of the three-phase separator and circumferentially disposed around an inner wall of the reactor housing, the guiding portion cooperating with the annular bubble baffle (12) to prevent bubbles in the gas-liquid-solid material from entering a first annular space between the outer guide barrel (2) and the reactor housing.

15. The fluidized bed reactor according to claim 14, **characterized in that** the guiding portion comprises an annular baffle (102) extending inclined downward in a radially inward direction from the inner wall of the reactor housing relative to a vertical central axis (110) of the outer housing (101).
